# EUROPEAN PATENT APPLICATION

(11) **EP 3 753 665 A1**
(43) Date of publication of application: **23.12.2020**
(21) Application number: 19754545.2
(22) Date of filing: 13.02.2019
(51) Int. Cl.: B23K 20/12

(54) **FRICTIONAL AGITATION POINT JOINING APPARATUS AND METHOD FOR OPERATING SAME**

(30) Priority: 15.02.2018 JP 2018025407
(71) Applicant: Kawasaki Jukogyo Kabushiki Kaisha, Hyogo 650-8670 (JP)
(72) Inventor: MURAMATSU, Yoshitaka, Hyogo 650-8670 (JP); OHASHI, Ryoji, Hyogo 650-8670 (JP); TAKEOKA, Naoki, Hyogo 650-8670 (JP); FUKUDA, Takuya, Hyogo 650-8670 (JP)
(74) Representative: Witte, Weller & Partner Patentanwälte mbB
(86) International application number: PCT/JP2019/004992
(87) International publication number: WO 2019/159930

(57) **Abstract**

A friction stir spot welding apparatus is provided, which includes a first tool (10), a first linear driver (7) configured to reciprocate the first tool (10) along an axis, a first rotary driver (8) configured to rotate the first tool (10) about the axis, and a control device (30). The control device (30) controls the first linear driver (7) and the first rotary driver (8) so that (A) the first tool (10) is rotated about the axis while a tip-end part of the first tool (10) is pressed against a to-be-joined object (W) to join the to-be-joined object (W), and (B) a boundary part of a hole (40) is then covered by a first part (41) pushed away by the first tool (10) and disposed at a periphery part of the hole (40), and/or a first member different from the to-be-joined object (W).

## Description

### TECHNICAL FIELD

The present disclosure relates to a friction stir spot welding apparatus and a method of operating the same.

### BACKGROUND ART

A method joining dissimilar metal plates is known (e.g., see Patent Document 1) in which a first metal plate and a second metal plate made of material of which the melting point is higher than that of the first metal plate are stacked on each other, and these plates are joined using frictional heat. In the joining method disclosed in Patent Document 1, a pin having a curved surface is provided. During a softening process of the first metal plate and the second metal plate, both the softened metal parts which are pushed away along the curved surface of the pin integrally continue, and on the boundary between both the softened metal parts, the softened metal part of the second metal plate covers over the softened metal part of the first metal plate to serve as an anchor configuration, and therefore, the first metal plate and the second metal plate are joined.

### [Reference Document of Conventional Art]

### [Patent Document]

[Patent Document 1] JP5854451B2

### DESCRIPTION OF THE DISCLOSURE

### [Problem to be Solved by the Disclosure]

However, in the joining method disclosed in Patent Document 1, a hole is formed in the joining part by the pin, and water tends to be collected inside the hole. When the water exists in the joining part, the metal with a larger ionization tendency may corrode.

The present disclosure is made in view of solving the problem, and one purpose thereof is to provide a friction stir spot welding apparatus and a method of operating the same, which are capable of realizing appropriate corrosion resistance, even if a plurality of members comprised of different materials are joined by a friction stir spot welding method.

### [Summary of the Disclosure]

In order to solve the conventional problem described above, a friction stir spot welding apparatus according to one aspect of the present disclosure is provided, which joins a to-be-joined object comprised of at least two or more kinds of plate-like members by softening with frictional heat and agitating the to-be-joined object. The friction stir spot welding apparatus includes a first tool formed cylindrically and configured to rotate about an axis thereof and reciprocate in a direction of the axis, a first rotary driver configured to rotate the first tool about the axis, a first linear driver configured to reciprocate the first tool along the axis, and a control device. The control device controls the first linear driver and the first rotary driver so that (A) the first tool is rotated about the axis while a tip-end part of the first tool is pressed against the to-be-joined object to join the to-be-joined object while forming a hole in the to-be-joined object, and (B) a boundary part of the hole is then covered by a first part that is a part pushed away by the first tool and disposed at a periphery part of the hole, and/or a first member that is a member different from the to-be-joined object.

Accordingly, since the joining part of the hole (boundary part of the hole) is covered by the first part and/or the first member, even if water exists in the hole (recess) of the to-be-joined object, the corrosion of metal with a larger ionization tendency can be reduced.

Moreover, according to another aspect of the present disclosure, a method is provided for operating a friction stir spot welding apparatus configured to join a to-be-joined object comprised of at least two or more kinds of plate-like members by softening with frictional heat and agitating the to-be-joined object. The friction stir spot welding apparatus includes a first tool formed cylindrically and configured to rotate about an axis thereof and reciprocate in a direction of the axis, a first rotary driver configured to rotate the first tool about the axis, and a first linear driver configured to reciprocate the first tool along the axis. The method includes operating the first linear driver and the first rotary driver so that (A) the first tool is rotated about the axis while a tip-end part of the first tool is pressed against the to-be-joined object to join the to-be-joined object while forming a hole in the to-be-joined object, and (B) a boundary part of the hole is then covered by a first part that is a part pushed away by the first tool and disposed at a periphery part of the hole, and/or a first member that is a member different from the to-be-joined object.

Accordingly, since the joining part of the hole (boundary part of the hole) is covered by the first part and/or the first member, even if water exists in the hole of the to-be-joined object, the corrosion of the metal with the larger ionization tendency can be reduced.

The above-described purpose, other purposes, features, and advantages of the present disclosure will become clear from detailed description of preferred modes described below with reference to the accompanying drawings.

### [Effect of the Disclosure]

According to the friction stir spot welding apparatus and the method of operating the same of the present disclosure, since the boundary part of the hole is covered by the first part and/or the first member, even if water exists in the hole of the to-be-joined object, the corrosion of the metal with the larger ionization tendency can be reduced.

### BRIEF DESCRIPTION OF DRAWINGS

Fig. 1 is a schematic view illustrating an outline configuration of a friction stir spot welding apparatus according to Embodiment 1.
Fig. 2 is a flowchart illustrating one example of operation of the friction stir spot welding apparatus according to Embodiment 1.
Fig. 3 is a schematic view illustrating a substantial part of the friction stir spot welding apparatus according to Embodiment 1.
Fig. 4 is a schematic view illustrating the substantial part of the friction stir spot welding apparatus according to Embodiment 1.
Fig. 5 is a flowchart illustrating one example of operation of a friction stir spot welding apparatus of Modification 1 of this embodiment.
Fig. 6 is a schematic view illustrating an outline configuration of a friction stir spot welding apparatus according to Embodiment 2.
Fig. 7 is a flowchart illustrating one example of operation of the friction stir spot welding apparatus according to Embodiment 2.
Fig. 8 is a schematic view illustrating an outline configuration of a friction stir spot welding apparatus according to Embodiment 3.
Fig. 9 is a flowchart illustrating one example of operation of the friction stir spot welding apparatus according to Embodiment 3.
Fig. 10 is a schematic view illustrating an outline configuration of a friction stir spot welding apparatus according to Embodiment 4.
Fig. 11 is a schematic view illustrating an outline configuration of a robotic arm of the friction stir spot welding apparatus illustrated in Fig. 10.
Fig. 12 is a flowchart illustrating one example of operation of the friction stir spot welding apparatus according to Embodiment 4.

### MODES FOR CARRYING OUT THE DISCLOSURE

Hereinafter, desirable embodiments of the present disclosure are described with reference to the drawings. Note that, below, the same reference characters are assigned to the same or corresponding components throughout the drawings to omit redundant description. Moreover, throughout the drawings, components needed for describing the present disclosure are selectively illustrated, and illustration of other components may be omitted. Further, the present disclosure is not limited to the following embodiments.

### (Embodiment 1)

A friction stir spot welding apparatus according to Embodiment 1 is a friction stir spot welding apparatus which joins a to-be-joined object comprised of at least two or more kinds of plate-like members by softening the to-be-joined object using frictional heat and agitating the to-be-joined object. This apparatus includes a first tool which is formed cylindrically and is configured so that a rotation about its axis and a reciprocating movement in a direction of the axis are possible, a first rotary driver which rotates the first tool about the axis, a first linear driver which reciprocates the first tool along the axis, and a control device. The control device controls the first linear driver and the first rotary driver so that (A) the to-be-joined object is joined while forming a hole in the to-be-joined object by rotating the first tool about the axis while a tip-end part of the first tool presses the to-be-joined object, and (B) a boundary part of the hole is then covered by a first part which is a part pushed away by the first tool and is disposed at a hole periphery part, and/or a first member which is a different member from the to-be-joined object.

Moreover, the friction stir spot welding apparatus according to Embodiment 1 may further include a second tool which is formed cylindrically, is configured so that a rotation about its axis and a reciprocating movement in a direction of the axis are possible, and has a tip-end part with a larger area than an opening area of the hole formed by the first tool, a second rotary driver which rotates the second tool about the axis, and a second linear driver which reciprocates the second tool along the axis. The control device may control the second linear driver and the second rotary driver, during (B), so that the second tool is rotated about the axis while the tip-end part of the second tool presses the first part, and the boundary part of the hole is covered by the softened first part.

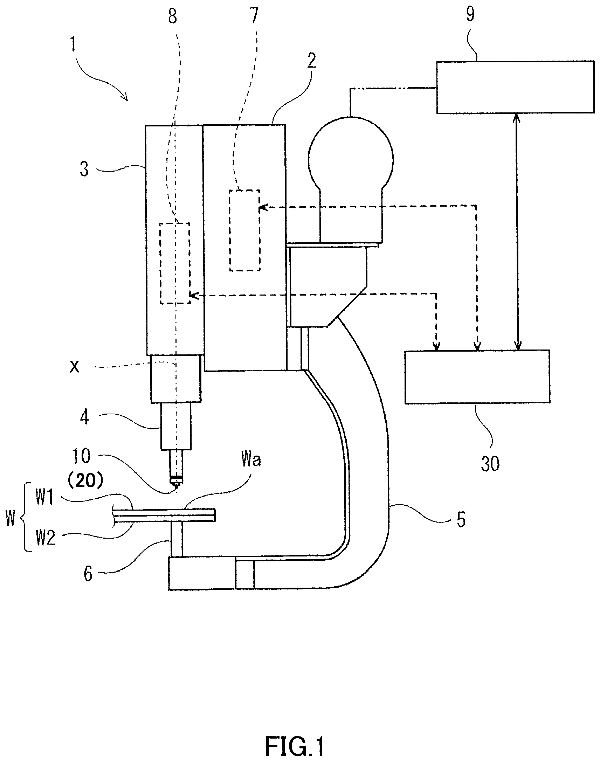

Below, one example of the friction stir spot welding apparatus according to Embodiment 1 is described in detail with reference to Figs. 1 to 4.

### [Configuration of Friction Stir Spot Welding Apparatus]

Fig. 1 is a schematic view illustrating an outline configuration of the friction stir spot welding apparatus according to Embodiment 1.

As illustrated in Fig. 1, a friction stir spot welding apparatus 1 according to Embodiment 1 includes a first tool 10, a base body 2, a movable body 3, a tool holder 4, a first linear driver 7, a first rotary driver 8, and a control device 30. The apparatus softens a spot welding part Wa of a to-be-joined object W by using frictional heat, and agitates the part to cause a plastic flow, thereby carrying out a friction stir spot welding.

The base body 2 is detachably attached to a tip-end part of a robotic arm 9. The movable body 3 is attached to the base body 2 so as to be movable in a direction of an axis X of the tool holder 4. The tool holder 4 is provided to a tip-end part of the movable body 3.

The tool holder 4 is rotatable about its axis X, and is movable in the direction of the axis X integrally with the movable body 3. The first tool 10 or the second tool 20 is detachably provided to a tip-end part of the tool holder 4. Note that the attaching and detaching (replacing) of the first tool 10 and the second tool 20 may be performed by an operator, or may be performed by a robotic arm different from the robotic arm 9.

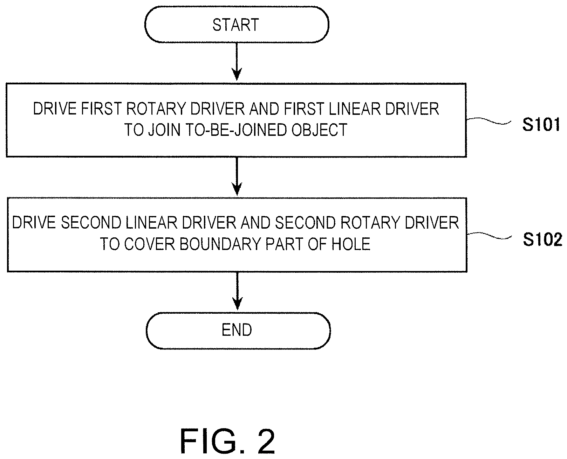

The first tool 10 and the second tool 20 may have a known configuration in the field of friction stir welding. Moreover, the second tool 20 has a larger area than the opening area of the hole (see Fig. 2) formed in the to-be-joined object W by the first tool 10. In detail, the second tool 20 has a tip-end part with a larger area than the area of the tip-end part of the first tool 10 (a cross-sectional area in a direction perpendicular to the axis X).

Moreover, the first linear driver 7 is disposed inside the base body 2. The first linear driver 7 moves the movable body 3 (the first tool 10 or the second tool 20) linearly in the direction of the axis X. That is, in Embodiment 1, the first linear driver 7 also serves as the second linear driver. For example, the first linear driver 7 may be an electric motor (servomotor), a ball-screw mechanism, a linear guide, or an air cylinder.

The first rotary driver 8 is disposed inside the movable body 3. The first rotary driver 8 rotates the tool holder 4 (the first tool 10 or the second tool 20) about the axis X. That is, in Embodiment 1, the first rotary driver 8 also serves as the second rotary driver. For example, an electric motor (servomotor) may be used as the first rotary driver 8.

Further, a curved frame 5 formed in a substantially C-shape (a substantially L-shape) is fixed to the base body 2. The curved frame 5 is formed so that a tip-end part thereof opposes to the first tool 10. Moreover, a support 6 is provided to the tip-end part of the curved frame 5. The support 6 supports the to-be-joined object W. That is, in Embodiment 1, the base body 2, the movable body 3, the tool holder 4, the curved frame 5, and the support 6 are comprised of a C-shaped gun (C-shaped frame).

In Embodiment 1, the to-be-joined object W is comprised of plate-like members W1 and W2. The plate-like member W1 may be made of metal (e.g., aluminum) or fiber-reinforced plastic (e.g., carbon fiber-reinforced plastic), and the plate-like member W2 may be made of metal (e.g., steel) different from the plate-like member W1.

Note that, although in Embodiment 1 the to-be-joined object W is comprised of the two kinds of plate-like members W1 and W2, it may be comprised of three or more kinds of plate-like members, without being limited to the two kinds.

The control device 30 includes a processor, such as a microprocessor or a CPU, and a memory, such as a ROM and a RAM (none of them are illustrated). The memory stores information, such as a basic program and various fixed data. The processor controls various operations of the first linear driver 7, the first rotary driver 8, and the robotic arm 9 by reading and executing software, such as the basic program stored in the memory.

Note that the control device 30 may be comprised of a sole control device 30 which carries out a centralized control, or may be comprised of a plurality of control devices 30 which collaboratively carry out a distributed control. Moreover, the control device 30 may be comprised of a microcomputer or may be comprised of a MPU, a PLC (Programmable Logic Controller), a logic circuit, etc.

Note that, although in Embodiment 1 the first linear driver 7 serves as the second linear driver and the first rotary driver 8 serves as the second rotary driver, i.e., the single C-shaped gun is provided, it is not limited to this configuration.

For example, a C-shaped gun different from the C-shaped gun provided with the first linear driver 7 and the first rotary driver 8 may be provided with the second linear driver, the second rotary driver, and the second tool 20. In this case, a single robotic arm 9 may selectively hold one of two C-shaped guns, or two robotic arms 9 may respectively hold the C-shaped guns.

### [Operation of Friction Stir Spot Welding Apparatus (Method of Operating Friction Stir Spot Welding Apparatus)]

Next, a method of operating the friction stir spot welding apparatus 1 according to Embodiment 1 is described with reference to Figs. 1 to 4. Note that the following operation is executed by the processor of the control device 30 reading the program stored in the memory.

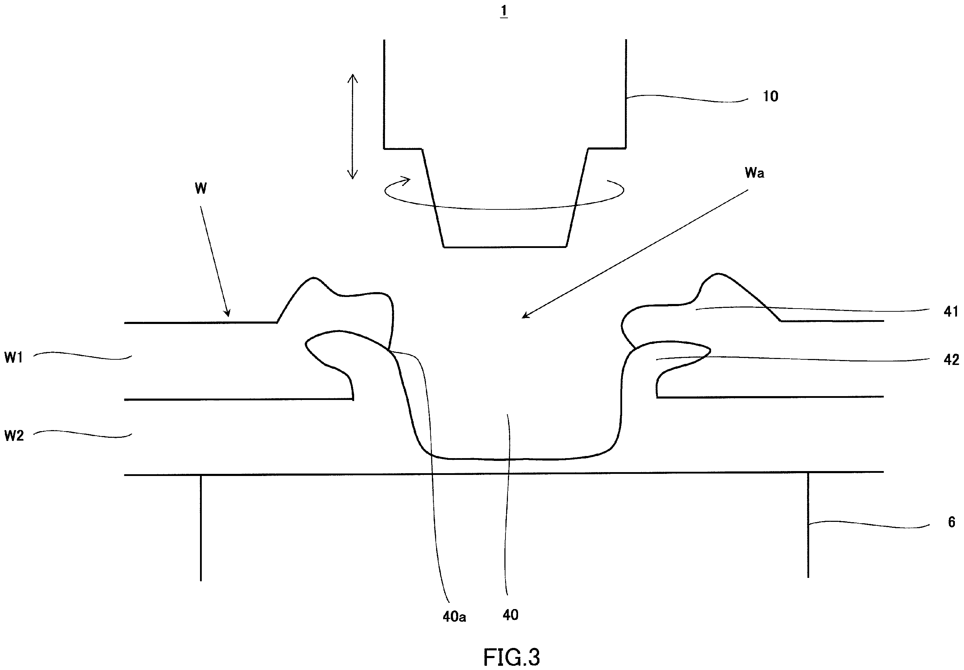

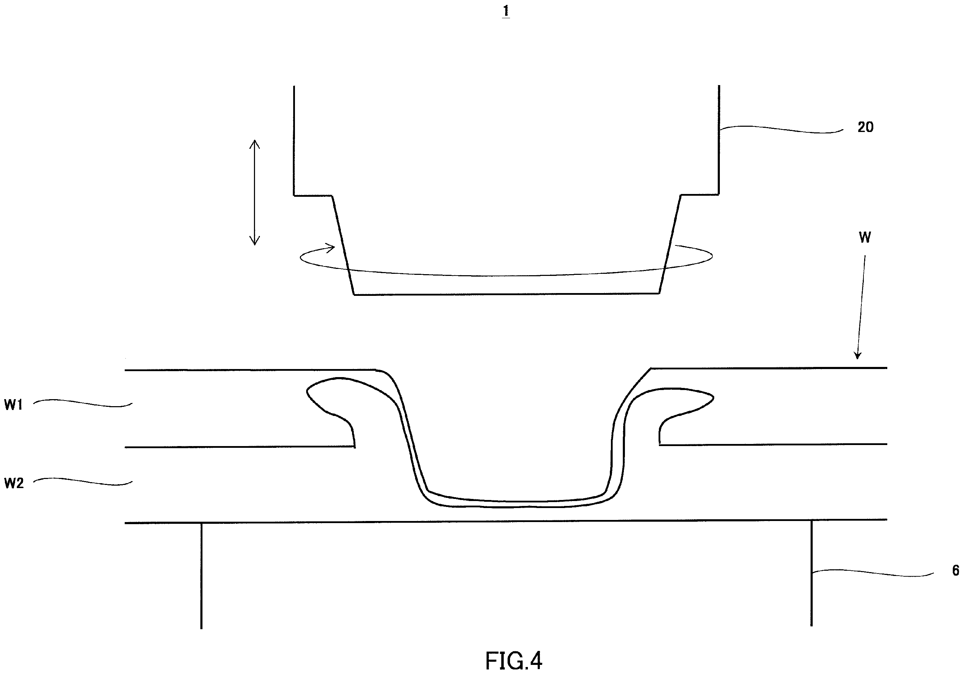

Fig. 2 is a flowchart illustrating one example of operation of the friction stir spot welding apparatus according to Embodiment 1. Figs. 3 and 4 are schematic views illustrating a substantial part of the friction stir spot welding apparatus according to Embodiment 1, where Fig. 3 illustrates a state in which the first tool performs a friction stir spot welding, and Fig. 4 illustrates a state in which the second tool covers a hole formed in the to-be-joined object with the first part.

First, the operator places the to-be-joined object W on an upper surface of the support 6. Then, the operator operates an input device (not illustrated) to input a joining execution of the to-be-joined object W into the control device 30.

Then, as illustrated in Fig. 2, the control device 30 drives the first rotary driver 8 to rotate the tool holder 4 and the first tool 10 at a given rotational speed (e.g., 50 to 6000rpm), and in this state, drives the first linear driver 7 to bring the first tool 10 into contact with the spot welding part Wa of the to-be-joined object W (Step S101). At this time, the control device 30 controls the first linear driver 7 so that the first tool 10 presses the to-be-joined object W at a given pressing force set beforehand (e.g., 4kN to 70kN). Note that the given rotational speed and the given pressing force may suitably be set beforehand by an experiment etc.

Therefore, in the to-be-joined object W, the tip-end part of the first tool 10 softens the spot welding part Wa of the plate-like members W1 and W2, thereby causing a plastic flow. Moreover, a second part 42 which is the softened part of the plate-like member W2 enters into the first part 41 which is the softened part of the plate-like member W1 to form an anchor configuration.

Then, when the tip end of the first tool 10 reaches a given first depth set beforehand, the control device 30 drives the first linear driver 7 so that the tip-end part of the first tool 10 separates from the to-be-joined object W.

Therefore, as illustrated in Fig. 3, the tip-end part of the first tool 10 forms a hole (recess) 40 in the spot welding part Wa of the to-be-joined object W. Moreover, the first part 41 which is pushed away by the tip-end part of the first tool 10 moves to an opening of the hole 40 of the plate-like member W1.

Next, the control device 30 causes a robotic arm different from the robotic arm 9 to replace the first tool 10 held at the tool holder 4 with the second tool 20. Note that the operator may perform the replacement from the first tool 10 to the second tool 20.

Moreover, although in Embodiment 1 the first tool 10 held at the tool holder 4 is replaced with the second tool 20, it is not limited to this configuration. A C-shaped gun different from the C-shaped gun provided with the first linear driver 7 and the first rotary driver 8 may be provided with the second linear driver, the second rotary driver, and the second tool 20. In this case, a single robotic arm 9 may selectively hold the two C-shaped guns, or two robotic arms 9 may hold the respective C-shaped guns.

Then, the control device 30 drives the second rotary driver (here, the first rotary driver 8) to rotate the tool holder 4 and the second tool 20 at the given rotational speed (e.g., 50 to 6000rpm), and in this state, drives the second linear driver (here, the first linear driver 7) to bring the second tool 20 into contact with the first part 41 near the opening of the hole 40 in the to-be-joined object W (Step S102) (see Fig. 4).

At this time, the control device 30 controls the first linear driver 7 so that the second tool 20 presses the to-be-joined object W at the given pressing force set beforehand (e.g., 4kN to 70kN).

Note that the control device 30 may control the first rotary driver 8 so that the rotational speed of the second tool 20 at Step S102 becomes the rotational speed same as the rotational speed of the first tool 10 at Step S101, or faster than the rotational speed of the first tool 10 at Step S101. Moreover, the control device 30 may control the first linear driver 7 so that the pressing force of the second tool 20 at Step S102 becomes the same as the pressing force of the first tool 10 at Step S101, or becomes smaller than the pressing force of the first tool 10 at Step S101. The rotational speed and the pressing force of the second tool 20 at Step S102 may suitably be set by an experiment etc.

Thus, a bulged part of the first part 41 is again softened by the second tool 20, flows into the hole 40, and covers a boundary part 40a of the hole 40 (the surface of the hole 40 is covered by the first part 41). Here, the boundary part 40a of the hole 40 refers to a boundary part between the first part 41 and the second part 42 in the surface of the hole 40.

Next, when the tip end of the second tool 20 reaches a given second depth set beforehand, the control device 30 drives the first linear driver 7 so that the tip-end part of the second tool 20 separates from the to-be-joined object W, and ends this program.

By performing the friction stir spot welding to the to-be-joined object W in the friction stir spot welding apparatus 1 according to Embodiment 1 configured in this way, the second part 42 which is the softened part of the plate-like member W2 enters into the first part 41 which is the softened part of the plate-like member W1 to increase a tensile-shear strength, thereby obtaining an anchoring effect in which a peel strength also becomes relatively high.

Moreover, in the friction stir spot welding apparatus 1 according to Embodiment 1, since the boundary part 40a of the hole 40 formed in the to-be-joined object W is covered by the bulged part of the first part 41 (the surface of the hole 40 is covered by the first part 41), corrosion of the metal with a larger ionization tendency among the plate-like members W1 and W2 can be reduced.

Note that, when the bulged part of the first part 41 fills the hole 40, the entering of water into the hole 40 can be reduced. Therefore, the corrosion of the metal with the larger ionization tendency among the plate-like members W1 and W2 can be further reduced.

### [Modification 1]

Next, a modification of the friction stir spot welding apparatus according to Embodiment 1 is described.

The friction stir spot welding apparatus of Modification 1 in Embodiment 1 is configured so that, during (B), the control device controls the first linear driver and the first rotary driver to rotate the first tool about the axis while pressing the first part by the tip-end part of the first tool to cover the boundary part of the hole by the softened first part.

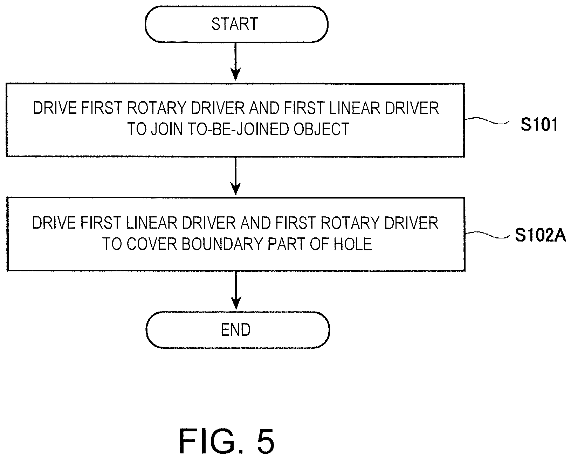

Below, one example of the friction stir spot welding apparatus of Modification 1 is described in detail with reference to Fig. 5. Note that, since the configuration of the friction stir spot welding apparatus of Modification 1 is fundamentally the same as the configuration of the friction stir spot welding apparatus according to Embodiment 1, the detailed description thereof is omitted.

Fig. 5 is a flowchart illustrating one example of operation of the friction stir spot welding apparatus of Modification 1 of this embodiment.

The operator first places the to-be-joined object W on the upper surface of the support 6. Then, the operator operates the input device (not illustrated) to input the joining execution of the to-be-joined object W into the control device 30.

Then, as illustrated in Fig. 5, the control device 30 drives the first rotary driver 8 to rotate the tool holder 4 and the first tool 10 at the given rotational speed (e.g., 50 to 6000rpm), and in this state, it drives the first linear driver 7 to bring the first tool 10 into contact with the spot welding part Wa of the to-be-joined object W (Step S101). At this time, the control device 30 controls the first linear driver 7 so that the first tool 10 presses the to-be-joined object W at the given pressing force set beforehand (e.g., 4kN to 70kN). Note that the given rotational speed and the given pressing force may suitably be set beforehand by an experiment etc.

Then, when the tip end of the first tool 10 reaches the given first depth set beforehand, the control device 30 drives the first linear driver 7 so that the tip-end part of the first tool 10 separates from the to-be-joined object W.

Next, the control device 30 drives the first rotary driver 8 to rotate the tool holder 4 and the first tool 10 at the given rotational speed (e.g., 50 to 6000rpm), and in this state, it drives the first linear driver 7 to bring the first tool 10 into contact with the first part 41 near the opening of the hole 40 in the to-be-joined object W (Step S102A).

At this time, the control device 30 controls the first linear driver 7 so that the first tool 10 presses the to-be-joined object W at the given pressing force set beforehand (e.g., 4kN to 70kN). Alternatively, the control device 30 may control the robotic arm 9 so that the tip-end part of the first tool 10 moves circularly or arcuately along the opening of the hole 40. Alternatively, the control device 30 may control the robotic arm 9 so that the tip-end part of the first tool 10 moves in the radial direction of the opening of the hole 40.

Note that the control device 30 may control the first rotary driver 8 so that the rotational speed of the first tool 10 at Step S102A becomes the rotational speed same as the rotational speed of the first tool 10 at Step S101, or faster than the rotational speed of the first tool 10 at Step S101. Moreover, the control device 30 may control the first linear driver 7 so that the pressing force of the first tool 10 at Step S102A becomes the same as the pressing force of the first tool 10 at Step S101, or smaller than the pressing force of the first tool 10 at Step S101. The rotational speed and the pressing force of the first tool 10 at Step S102A may suitably be set by an experiment etc.

Thus, the bulged part of the first part 41 is again softened by the first tool 10, flows into the hole 40, and covers the boundary part 40a of the hole 40 (the surface of the hole 40 is covered by the first part 41).

Next, when the tip end of the first tool 10 reaches the given second depth set beforehand, the control device 30 drives the first linear driver 7 so that the tip-end part of the first tool 10 separates from the to-be-joined object W, and ends this program.

The friction stir spot welding apparatus 1 of Modification 1 configured in this way also has similar operation and effects to those of the friction stir spot welding apparatus 1 according to Embodiment 1.

### (Embodiment 2)

A friction stir spot welding apparatus according to Embodiment 2 is the friction stir spot welding apparatus according to Embodiment 1 which is further provided with a heat-source apparatus, and the control device causes, during (B), the heat-source apparatus to melt the softened part of the to-be-joined object disposed at the hole periphery part so as to cover the boundary part of the hole.

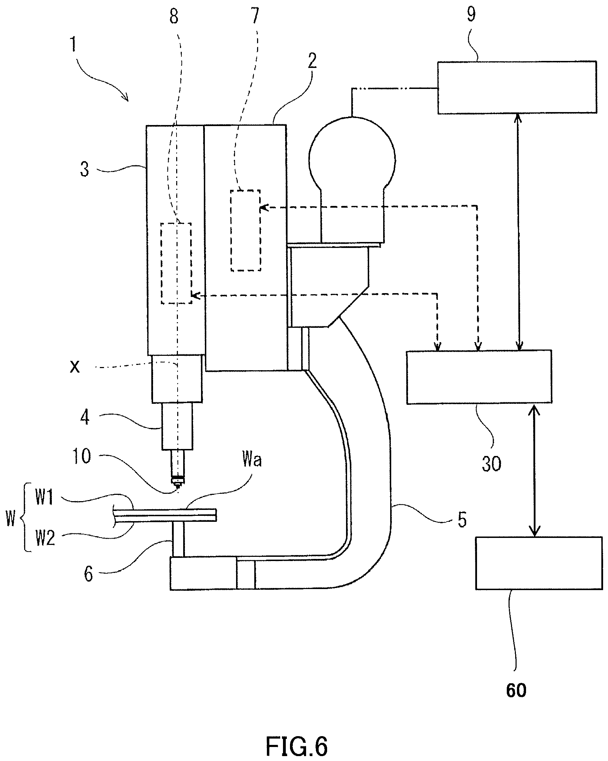

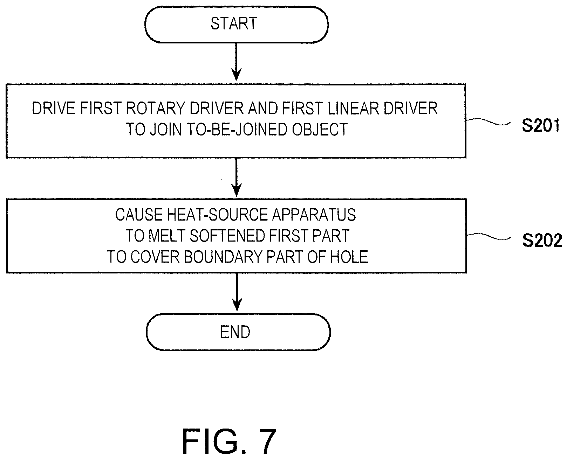

Below, one example of the friction stir spot welding apparatus according to Embodiment 2 is described in detail with reference to Figs. 6 and 7.

### [Configuration of Friction Stir Spot Welding Apparatus]

Fig. 6 is a schematic view illustrating an outline configuration of the friction stir spot welding apparatus according to Embodiment 2.

As illustrated in Fig. 6, although the friction stir spot welding apparatus 1 according to Embodiment 2 has fundamentally the same configuration as the friction stir spot welding apparatus 1 according to Embodiment 1, it is different in that it is further provided with a heat-source apparatus 60. The heat-source apparatus 60 causes the first part 41 disposed at the periphery part of the hole 40 of the to-be-joined object W to melt. For example, the heat-source apparatus 60 may be a laser irradiation apparatus or may be an arc welding apparatus.

### [Operation of Friction Stir Spot Welding Apparatus (Method of Operating Friction Stir Spot Welding Apparatus)]

Next, a method of operating the friction stir spot welding apparatus 1 according to Embodiment 2 is described with reference to Figs. 6 and 7. Note that the following operation is executed by the processor of the control device 30 reading the program stored in the memory.

Fig. 7 is a flowchart illustrating one example of operation of the friction stir spot welding apparatus according to Embodiment 2.

The operator first places the to-be-joined object W on the upper surface of the support 6. Then, the operator operates the input device (not illustrated) to input the joining execution of the to-be-joined object W into the control device 30.

Then, as illustrated in Fig. 7, the control device 30 drives the first rotary driver 8 to rotate the tool holder 4 and the first tool 10 at the given rotational speed (e.g., 50 to 6000rpm), and in this state, it drives the first linear driver 7 to bring the first tool 10 into contact with the spot welding part Wa of the to-be-joined object W (Step S201). At this time, the control device 30 controls the first linear driver 7 so that the first tool 10 presses the to-be-joined object W at the given pressing force set beforehand (e.g., 4kN to 70kN). Note that the given rotational speed and the given pressing force may suitably be set beforehand by an experiment etc.

Then, when the tip end of the first tool 10 reaches the given first depth set beforehand, the control device 30 drives the first linear driver 7 so that the tip-end part of the first tool 10 separates from the to-be-joined object W.

Next, the control device 30 operates the heat-source apparatus 60 to cause the first part 41 disposed at the periphery part of the hole 40 of the to-be-joined object W to melt (Step S202). Thus, the bulged part of the first part 41 melts, flows into the hole 40, and covers the boundary part 40a of the hole 40 (the surface of the hole 40 is covered by the first part 41).

Then, when a given period of time set beforehand is lapsed, the control device 30 stops the heat-source apparatus 60, and ends this program. Note that the given time may be set beforehand by an experiment etc.

The friction stir spot welding apparatus 1 according to Embodiment 2 configured in this way also has similar operation and effects to those of the friction stir spot welding apparatus 1 according to Embodiment 1.

### (Embodiment 3)

A friction stir spot welding apparatus according to Embodiment 3 further includes an arc welding apparatus, and during (B), the control device places a filler material which is the first member at the hole and/or the periphery part of the hole, causes the arc welding apparatus to perform an arc welding to cover the boundary part of the hole by the filler material.

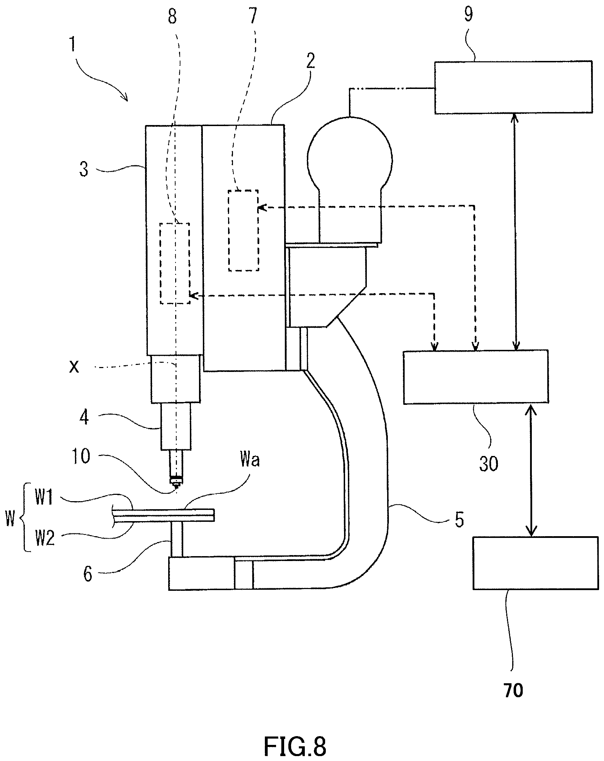

Below, one example of the friction stir spot welding apparatus according to Embodiment 3 is described in detail with reference to Figs. 7 and 8.

### [Configuration of Friction Stir Spot Welding Apparatus]

Fig. 8 is a schematic view illustrating an outline configuration of the friction stir spot welding apparatus according to Embodiment 3.

As illustrated in Fig. 8, the friction stir spot welding apparatus 1 according to Embodiment 3 has fundamentally the same configuration as the friction stir spot welding apparatus 1 according to Embodiment 1, but it differs in that it is further provided with an arc welding apparatus 70. The arc welding apparatus 70 places the filler material at the hole 40 of the to-be-joined object W, and/or the periphery part of the hole 40, and causes the filler material to melt. For example, the filler material may be the material which constitutes the plate-like member W1 or the plate-like member W2.

### [Operation of Friction Stir Spot Welding Apparatus (Method of Operating Friction Stir Spot Welding Apparatus)]

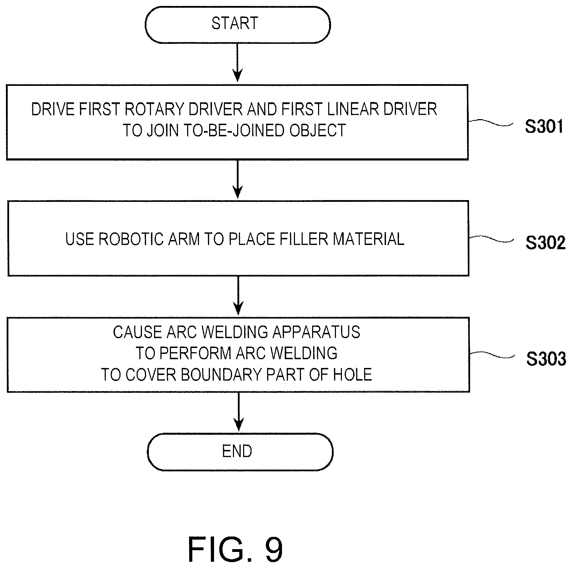

Next, a method of operating the friction stir spot welding apparatus 1 according to Embodiment 3 is described with reference to Figs. 8 and 9. Note that the following operation is executed by the processor of the control device 30 reading the program stored in the memory.

Fig. 9 is a flowchart illustrating one example of operation of the friction stir spot welding apparatus according to Embodiment 3.

The operator first places the to-be-joined object W on the upper surface of the support 6. Then, the operator operates the input device (not illustrated) to input the joining execution of the to-be-joined object W into the control device 30.

Then, as illustrated in Fig. 9, the control device 30 drives the first rotary driver 8 to rotate the tool holder 4 and the first tool 10 at the given rotational speed (e.g., 50 to 6000rpm), and in this state, it drives the first linear driver 7 to bring the first tool 10 into contact with the spot welding part Wa of the to-be-joined object W (Step S301). At this time, the control device 30 controls the first linear driver 7 so that the first tool 10 presses the to-be-joined object W at the given pressing force set beforehand (e.g., 4kN to 70kN). Note that the given rotational speed and the given pressing force may suitably be set beforehand by an experiment etc.

Then, when the tip end of the first tool 10 reaches the given first depth set beforehand, the control device 30 drives the first linear driver 7 so that the tip-end part of the first tool 10 separates from the to-be-joined object W.

Next, the control device 30 uses a robotic arm which is different from the robotic arm 9 to place the filler material at the hole 40 of the to-be-joined object W, and/or the periphery part of the hole 40 (Step S302). Then, the control device 30 causes the arc welding apparatus 70 to perform the arc welding (Step S303).

Thus, the filler material disposed at the hole 40 of the to-be-joined object W and/or the periphery part of the hole 40 melts and covers the boundary part 40a of the hole 40 (the surface of the hole 40 is covered by the first part 41).

Next, when a given period of time set beforehand is lapsed, the control device 30 stops the arc welding apparatus 70, and ends this program. Note that the given period of time may be set beforehand by an experiment etc.

The friction stir spot welding apparatus 1 according to Embodiment 3 configured in this way also has similar operation and effects to those of the friction stir spot welding apparatus 1 according to Embodiment 1.

### (Embodiment 4)

A friction stir spot welding apparatus according to Embodiment 4 further includes a robotic arm, and during (B), the control device causes the robotic arm to place at the hole a non-conductive adhesive and/or a non-conductive sealant which is the first member to cover the boundary part of the hole.

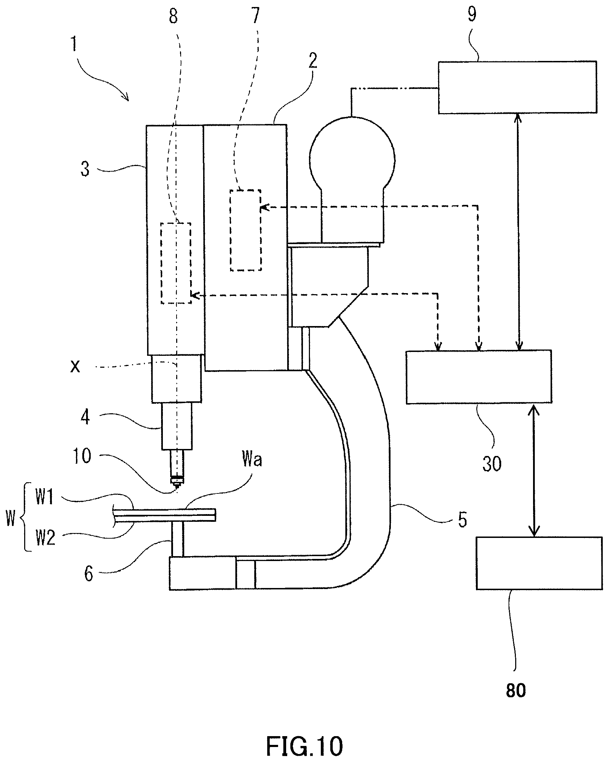

Below, one example of the friction stir spot welding apparatus according to Embodiment 4 is described in detail with reference to Figs. 10 to 12.

### [Configuration of Friction Stir Spot Welding Apparatus]

Fig. 10 is a schematic view illustrating an outline configuration of the friction stir spot welding apparatus according to Embodiment 4.

As illustrated in Fig. 10, the friction stir spot welding apparatus 1 according to Embodiment 4 has fundamentally the same configuration as the friction stir spot welding apparatus 1 according to Embodiment 1, but it differs in that a robotic arm 80 which is different form the robotic arm 9 is further provided. Note that, in Embodiment 4, although the robotic arm 9 and the robotic arm 80 are different robotic arms, the robotic arm 9 and the robotic arm 80 may be the same robotic arm, without being limited to the above configuration. Moreover, the robotic arm 80 may be a horizontal articulated robot, or may be a vertical articulated robot.

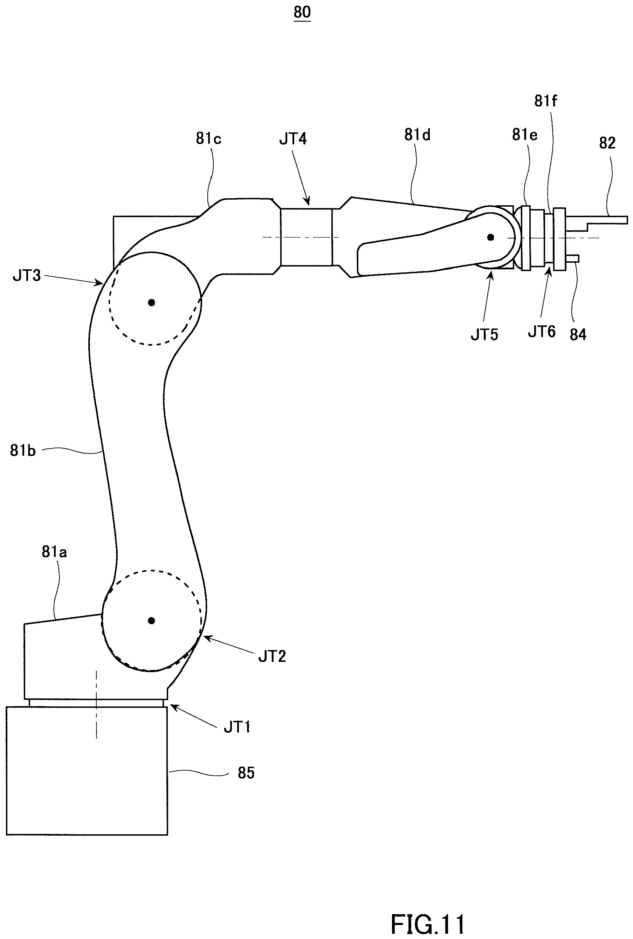

Here, one example of a configuration of the robotic arm 80 is described with reference to Fig. 11.

Fig. 11 is a schematic view illustrating an outline configuration of the robotic arm of the friction stir spot welding apparatus illustrated in Fig. 10.

As illustrated in Fig. 11, the robotic arm 80 is an articulated robotic arm having a plurality of links (here, a first link 81a to a sixth link 81f), a plurality of joints (here, a first joint JT1 to a sixth joint JT6), and a pedestal 15 which supports the links and joints.

In the first joint JT1, the pedestal 15 and a base-end part of the first link 81a are coupled to each other pivotably about an axis extending in the vertical direction. In the second joint JT2, a tip-end part of the first link 81a and a base-end part of the second link 81b are coupled to each other pivotably about an axis extending in the horizontal direction. In the third joint JT3, a tip-end part of the second link 81b and a base-end part of the third link 81c are coupled to each other pivotably about an axis extending in the horizontal direction.

Moreover, in the fourth joint JT4, a tip-end part of the third link 81c and a base-end part of the fourth link 81d are coupled to each other pivotably about an axis extending in the longitudinal direction of the fourth link 81d. In the fifth joint JT5, a tip-end part of the fourth link 81d and a base-end part of the fifth link 81e are coupled to each other pivotably about an axis perpendicular to the longitudinal direction of the fourth link 81d. In the sixth joint JT6, a tip-end part of the fifth link 81e and a base-end part of the sixth link 81f are twistably coupled to each other.

A mechanical interface is provided to a tip-end part of the sixth link 81f. An end effector 82 corresponding to the type of work is detachably attached to the mechanical interface. Moreover, a position detection sensor 84 is disposed at the tip-end part of the sixth link 81f. The position detection sensor 84 detects positional information on the hole 40 and outputs the detected data to the control device 30. For example, the position detection sensor 84 may be a camera, an optical sensor, etc.

Note that, in Embodiment 4, a dispenser for applying the adhesive and/or the sealant is provided as the end effector 82. Moreover, inside the dispenser, a cartridge for supplying the adhesive and/or the sealant to the dispenser is provided.

As the adhesive, various kinds of adhesives may be used, and, for example, a conductive adhesive may be used, or a non-conductive adhesive may be used. Moreover, as the sealant, various kinds of sealants may be used, and, for example, it may be a conductive sealant, or may be a non-conductive sealant.

Moreover, the first joint JT1 to the sixth joint JT6 are each provided with a drive motor (not illustrated) as one example of an actuator which relatively rotates two members coupled by the joint. For example, the drive motor may be a servomotor which is servo-controlled by the control device 30. Moreover, the first joint JT1 to the sixth joint JT6 are each provided with a rotation sensor which detects a rotational position of the drive motor, and a current sensor which detects electric current for controlling the rotation of the drive motor (none of them is illustrated). For example, the rotation sensor may be an encoder.

### [Operation of Friction Stir Spot Welding Apparatus (Method of Operating Friction Stir Spot Welding Apparatus)]

Next, a method of operating the friction stir spot welding apparatus 1 according to Embodiment 4 is described with reference to Figs. 10 to 12. Note that the following operation is executed by the processor of the control device 30 reading the program stored in the memory.

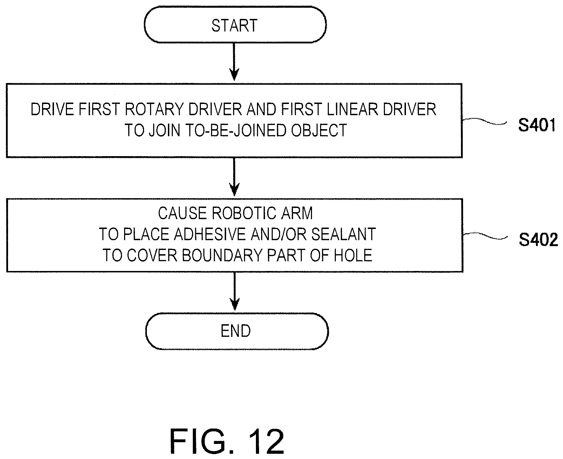

Fig. 12 is a flowchart illustrating one example of operation of the friction stir spot welding apparatus according to Embodiment 4.

The operator first places the to-be-joined object W on the upper surface of the support 6. Then, the operator operates the input device (not illustrated) to input the joining execution of the to-be-joined object W into the control device 30.

Then, as illustrated in Fig. 12, the control device 30 drives the first rotary driver 8 to rotate the tool holder 4 and the first tool 10 at the given rotational speed (e.g., 50 to 6000rpm), and in this state, it drives the first linear driver 7 to bring the first tool 10 into contact with the spot welding part Wa of the to-be-joined object W (Step S401). At this time, the control device 30 controls the first linear driver 7 so that the first tool 10 presses the to-be-joined object W at the given pressing force set beforehand (e.g., 4kN to 70kN). Note that the given rotational speed and the given pressing force may suitably be set beforehand by an experiment etc.

Then, when the tip end of the first tool 10 reaches the given first depth set beforehand, the control device 30 drives the first linear driver 7 so that the tip-end part of the first tool 10 separates from the to-be-joined object W.

Next, the control device 30 causes the robotic arm 80 to place the adhesive and/or the sealant at the hole 40 of the to-be-joined object W (Step S402), and ends this program. Therefore, the boundary part 40a of the hole 40 is covered by the adhesive and/or the sealant (the surface of the hole 40 is covered by the adhesive and/or the sealant).

The friction stir spot welding apparatus 1 according to Embodiment 4 configured in this way also has similar operation and effects to those of the friction stir spot welding apparatus 1 according to Embodiment 1.

It is apparent for the person skilled in the art that many improvements or other embodiments of the present disclosure are possible from the above description. Therefore, the above description is to be interpreted only as the illustration, and it is provided in order to teach the person skilled in the art the best mode that implements the present disclosure. The details of the configurations and/or the functions may be substantially changed without departing from the spirit of the present disclosure. Moreover, various inventions may be formed by suitable combinations of the plurality of components disclosed in the above embodiments.

### INDUSTRIAL APPLICABILITY

Since the friction stir spot welding apparatus and the method of operating the same of the present disclosure cover the boundary part of the hole by the first part or the first member, even if water exists in the hole of the to-be-joined object, the corrosion of the metal with the larger ionization tendency can be reduced, and therefore, they are useful.

### DESCRIPTION OF REFERENCE CHARACTERS

- 1: Friction Stir Spot Welding Apparatus
- 2: Base Body
- 3: Movable Body
- 4: Tool Holder
- 5: Curved Frame
- 6: Support
- 7: First Linear Driver
- 8: First Rotary Driver
- 9: Robotic Arm
- 10: First Tool
- 15: Pedestal
- 20: Second Tool
- 30: Control Device
- 40: Hole
- 40a: Boundary Part
- 41: First Part
- 42: Second Part
- 60: Heat-source Apparatus
- 70: Arc Welding Apparatus
- 80: Robotic Arm
- 81a: First Link
- 81b: Second Link
- 81c: Third Link
- 81d: Fourth Link
- 81e: Fifth Link
- 81f: Sixth Link
- 82: End Effector
- 84: Position Detection Sensor
- JT1: First Joint
- JT2: Second Joint
- JT3: Third Joint
- JT4: Fourth Joint
- JT5: Fifth Joint
- JT6: Sixth Joint
- W: To-be-joined Object
- W1: Plate-like Member
- W2: Plate-like Member
- Wa: Spot Welding Part

## Claims

1. A friction stir spot welding apparatus configured to join a to-be-joined object comprised of at least two or more kinds of plate-like members by softening with frictional heat and agitating the to-be-joined object, comprising:
a first tool formed cylindrically and configured to rotate about an axis thereof and reciprocate in a direction of the axis;
a first rotary driver configured to rotate the first tool about the axis;
a first linear driver configured to reciprocate the first tool along the axis; and
a control device, the control device controlling the first linear driver and the first rotary driver so that:
(A) the first tool is rotated about the axis while a tip-end part of the first tool is pressed against the to-be-joined object to join the to-be-joined object while forming a hole in the to-be-joined object; and
(B) a boundary part of the hole is then covered by a first part that is a part pushed away by the first tool and disposed at a periphery part of the hole, and/or a first member that is a member different from the to-be-joined object.

2. The friction stir spot welding apparatus of claim 1, further comprising:
a second tool formed cylindrically and configured to rotate about an axis thereof and reciprocate in a direction of the axis, a tip-end part thereof having a larger area than an opening area of the hole formed by the first tool;
a second rotary driver configured to rotate the second tool about the axis; and
a second linear driver configured to reciprocate the second tool along the axis,
wherein the control device controls the second linear driver and the second rotary driver, during (B), so that the second tool is rotated about the axis while the tip-end part of the second tool is pressed against the first part to cover the boundary part of the hole by the softened first part.

3. The friction stir spot welding apparatus of claim 1, wherein the control device controls the first linear driver and the first rotary driver, during (B), so that the first tool is rotated about the axis while the tip-end part of the first tool is pressed against the first part to cover the boundary part of the hole by the softened first part.

4. The friction stir spot welding apparatus of claim 1, further comprising a heat-source apparatus,
wherein, during (B), the control device causes the heat-source apparatus to melt the first part to cover the boundary part of the hole by the first part.

5. The friction stir spot welding apparatus of claim 1, further comprising an arc welding apparatus,
wherein, during (B), the control device places a filler material that is the first member at the hole and/or the first part, and causes the arc welding apparatus to perform an arc welding to cover the boundary part of the hole by the filler material.

6. The friction stir spot welding apparatus of claim 1, further comprising a robotic arm,
wherein, during (B), the control device causes the robotic arm to place adhesive and/or sealant that is the first member at the hole to cover the boundary part of the hole.

7. A method of operating a friction stir spot welding apparatus configured to join a to-be-joined object comprised of at least two or more kinds of plate-like members by softening with frictional heat and agitating the to-be-joined object, the apparatus comprising:
a first tool formed cylindrically and configured to rotate about an axis thereof and reciprocate in a direction of the axis;
a first rotary driver configured to rotate the first tool about the axis; and
a first linear driver configured to reciprocate the first tool along the axis,
the method comprising the steps of:
operating the first linear driver and the first rotary driver so that:
(A) the first tool is rotated about the axis while a tip-end part of the first tool is pressed against the to-be-joined object to join the to-be-joined object while forming a hole in the to-be-joined object; and
(B) a boundary part of the hole is then covered by a first part that is a part pushed away by the first tool and disposed at a periphery part of the hole, and/or a first member that is a member different from the to-be-joined object.

8. The method of claim 7, wherein the apparatus further comprises:
a second tool formed cylindrically and configured to rotate about an axis thereof and reciprocate in a direction of the axis, a tip-end part thereof having a larger area than an opening area of the hole formed by the first tool;
a second rotary driver configured to rotate the second tool about the axis; and
a second linear driver configured to reciprocate the second tool along the axis, and
wherein the second linear driver and the second rotary driver are operated, during (B), so that the second tool is rotated about the axis while the tip-end part of the second tool is pressed against the first part to cover the boundary part of the hole by the softened first part.

9. The method of claim 7, wherein the first linear driver and the first rotary driver are operated, during (B), so that the first tool is rotated about the axis while the tip-end part of the first tool is pressed against the first part to cover the boundary part of the hole by the softened first part.

10. The method of claim 7, wherein the apparatus further comprises a heat-source apparatus, and
wherein, during (B), the heat-source apparatus melts the first part to cover the boundary part of the hole by the first part.

11. The method of claim 7, wherein the apparatus further comprises an arc welding apparatus, and
wherein, during (B), a filler material that is the first member is placed at the hole and/or the first part, and the arc welding apparatus performs an arc welding to cover the boundary part of the hole by the filler material.

12. The method of claim 7, wherein the apparatus further comprises a robotic arm, and
wherein, during (B), the robotic arm places adhesive and/or sealant that is the first member at the hole to cover the boundary part of the hole.
